# EUROPÄISCHE PATENTSCHRIFT

(11) **EP 2 217 490 B1**
(45) Veröffentlichungstag und Bekanntmachung des Hinweises auf die Patenterteilung: **23.10.2013**
(21) Anmeldenummer: 08787417.8
(22) Anmeldetag: 22.08.2008
(51) Int. Cl.: F16L 3/02, F16L 3/24, H02G 3/32, B64C 1/40, B64C 1/06

(54) **RUMPFZELLENSTRUKTUR EINES FLUGZEUGS ZUR VEREINFACHTEN VERLEGUNG UND BEFESTIGUNG VON HALTERN ZUR BEFESTIGUNG VON LEITUNGEN**
FUSELAGE CELL STRUCTURE OF AN AIRPLANE FOR THE SIMPLIFIED INSTALLATION AND ATTACHMENT OF FASTENERS FOR FASTENING CONDUITS
STRUCTURE CELLULAIRE DU FUSELAGE D'UN AVION POUR SIMPLIFIER LA POSE ET LA FIXATION D'ATTACHES SERVANT À LA FIXATION DE CONDUITES

(30) Priorität: 05.11.2007 DE 102007052672; 05.11.2007 US 1912
(43) Veröffentlichungstag der Anmeldung: 18.08.2010
(73) Patentinhaber: Airbus Operations GmbH, 21129 Hamburg (DE)
(72) Erfinder: STEPHAN, Andreas, 21717 Fredenbeck (DE)
(74) Vertreter: Isarpatent
(86) Internationale Anmeldenummer: PCT/EP2008/061016
(87) Internationale Veröffentlichungsnummer: WO 2009/059822

(56) Entgegenhaltungen:
- WO-A-2007/133966
- WO-A-2008/132171
- DE-A1- 19 639 339
- GB-A- 2 357 117
- US-A- 2 346 200
- US-A- 4 353 519
- US-A1- 2005 082 431
- US-A1- 2005 211 847
- US-A1- 2006 016 937

## Beschreibung

Die Erfindung betrifft eine Rumpfzellenstruktur eines Flugzeugs zur vereinfachten Verlegung und Befestigung mindestens eines Halters für mindestens eine Leitung, wobei die Rumpfzellenstruktur eine Vielzahl von insbesondere mit einem Aluminiumlegierungsmaterial gebildeten Versteifungselementen aufweist.

In modernen Flugzeugen, insbesondere in aktuellen Typen von Passagierflugzeugen ist eine zunehmend größere Anzahl von Leitungen zu führen und zu befestigen. Bei den Leitungen kann es sich beispielsweise um elektrische Versorgungs- und Signalleitungen, Glasfaserleitungen, Hydraulikleitungen, Wasser- und Abwasserleitungen sowie Klimatisierungsleitungen handeln. Sämtliche Leitungen müssen im Inneren der Rumpfzellenstruktur des Flugzeugs befestigt werden.

Bekannte Ausführungsformen von Haltern für Leitungen erfordern im Allgemeinen pro Befestigungspunkt die Einbringung von bevorzugt mindestens zwei Bohrungen in ein Versteifungselement der Rumpfzellenstruktur. Bei den Versteifungselementen innerhalb der Rumpfzellenstruktur kann es sich beispielsweise um Stringer, Querträger oder Ringspante handeln. Durch die Vielzahl der notwendigen Bohrungen ist eine Schwächung der Rumpfzellenstruktur, die die Statik der Rumpfzelle negativ beeinflusst und die Bildung von Ermüdungsrissen im Bohrungsbereich begünstigt, in der Regel unvermeidbar. Die Summe der Bohrungen kann somit im Ergebnis zu einer unerwünschten Gewichtserhöhung der Rumpfzelle führen. Darüber hinaus erfordert jede Bohrung einen erheblichen Arbeitsaufwand. Zunächst müssen die Koordinaten der Bohrung möglichst präzise festgelegt werden, was heutzutage oftmals noch mit großformatigen und unhandlichen Schablonen erfolgt. Anschließend wird die Bohrung in der Regel manuell mit einer Handbohrmaschine eingebracht. Die entstehenden Späne werden während des Bohrvorgangs abgesaugt oder müssen im Anschluss äußerst sorgfältig entfernt werden, um späteren Scheuerstellen an den Leitungen, hierdurch bedingten Kurzschlüssen und/oder Korrosionsproblemen vorzubeugen. Erst nach einer Korrosionsschutzbehandlung der Bohrungsleibung mit einem geeigneten Kunststoffmaterial kann der Halter für die zu befestigende Leitung in der Bohrung befestigt werden. Falsch gesetzte Bohrungen müssen in einem aufwändigen Verfahren aus flugsicherheitstechnischen Gründen mit Nieten geschlossen werden. Inkorrekt positionierte Bohrungen in bestimmten Bereichen der Primärstruktur, beispielsweise im Kopf- oder Fußbereich eines Ringspants, erfordern darüber hinaus unter Umständen einen Austausch des betroffenen Versteifungsprofils bzw. Versteifungselements.

Die US 2,346,200 A beschreibt die Befestigung einer Leitung mittels einer Halterungsvorrichtung, die mit einem federnden Metallblechstreifen ausgebildet ist, an einem Stringer im Flugzeugbau.

In der US 2006/0016937 A1 wird ein Einhängklemmhalter beschrieben, der dafür vorgesehen ist, an einem Querträger einer Flugzeugrumpfstruktur zur Halterung von Kabelbündeln zu dienen.

Die DE 196 39 339 A1 beschreibt eine Schalenstruktur aus faserverstärktem Kunststoff, welche insbesondere für Wagenkästen von Schienenfahrzeugen vorgesehen ist, wobei die DE 196 39 339 A1 auch eine Anwendung auf dem Gebiet der Schiffskörper, Flugzeugstrukturen oder Behälter erwähnt. Die Schalenstruktur weist Verstärkungsprofile auf, wobei Verstärkungsfasern der Verstärkungsprofile durch ein Kopfprofil mit T-Nuten abgedeckt sind.

Aufgabe der Erfindung ist es daher, eine Rumpfzellenstruktur eines Flugzeugs so weiter zu bilden, dass sie eine erleichterte Befestigung von Haltern für Leitungssysteme und somit eine Reduzierung des Montageaufwands für die Verkabelung erlaubt, wobei die Befestigung der Leitungen innerhalb der Rumpfzellenstruktur im Wesentlichen ohne die Einbringung von Bohrungen (bohrungslos) in insbesondere tragende Versteifungselemente erfolgt.

Diese Aufgabe wird durch eine Rumpfzellenstruktur mit den Merkmalen des Patentanspruchs 1 gelöst.

Dadurch, dass die Versteifungselemente zumindest bereichsweise mindestens eine Nut aufweisen und in der mindestens einen Nut mindestens ein Halter zur Lagefixierung mindestens einer Leitung befestigbar ist, können die für eine Verkabelung erforderlichen Leitungshalter innerhalb der erfindungsgemäß ausgebildeten Rumpfzellenstruktur bohrungslos, beispielsweise an Querträgern und Stringern bzw. Stringerprofilen, mittels einer formschlüssigen Klemmbefestigung in den Nuten festgesetzt werden. Die Nuten erlauben gleichfalls das Festsetzen der Halter für die Leitung an nahezu beliebigen Positionen entlang der Längserstreckung der Nut, wodurch die Leitungsverlegung nachträglich leichter variiert und insbesondere besser an wechselnde Kundenanforderungen angepasst werden kann.
Die erforderlichen Nuten werden bevorzugt schon während des Herstellungsprozesses der mit Aluminiumlegierungen gebildeten endlosen Versteifungselemente, die in der Regel im Strangpressverfahren gezogen werden, eingebracht. Vor dem Einbau in der Rumpfzelle erfolgt die Ablängung der Endlosprofile. Bei den Versteifungsprofilen, Versteifungselementen bzw. den tragenden Elementen kann es sich beispielsweise um Stringer zur Verstärkung der Rumpfzellenhaut zwischen Ringspanten oder um Querträger zur Abstützung eines Fußbodengerüsts handeln. Alternativ ist es möglich, die Nut auch nachträglich spanend in die extrudierten Versteifungselemente einzubringen.

Die Lagefixierung der mindestens einen Leitung auf dem Halter kann durch separate Binder erfolgen. Alternativ kann der Halter oberseitig von vornherein zum Einrasten von Leitungen ausgestaltet sein, so dass die Leitung durch einfaches Eindrücken in den Halter auf diesem fixierbar und gegebenenfalls auch wieder lösbar ist.

Eine Weiterbildung der Rumpfzellenstruktur sieht vor, dass die Nuten in den Versteifungselementen eine umgekehrt T-förmige Querschnittsgeometrie aufweisen. Infolge der umgekehrt T-förmigen Querschnittsgeometrie der Nut wird ein fester Sitz der Halter erreicht, der auch die Befestigung von schweren Leitungen, wie zum Beispiel von Hydraulikleitungen oder Energieversorgungsleitungen erlaubt.
Die Nut weist eine im Vergleich zur Basis verjüngte Einfädelöffnung auf, die durch zwei nach innen weisende Schenkel begrenzt ist und entspricht in ihrer Gestaltung - abgesehen von den gerastert angeordneten Einfädelöffnungen - in etwa den in der zivilen Luftfahrt üblicherweise eingesetzten Sitzschienenprofilen für die Arretierung der Bestuhlung in der Passagierkabine.
Bei erforderlichen Änderungen an der Leitungsverlegung können die Halter wieder aus der Nut gelöst und an anderer geeigneter Stelle innerhalb der Rumpfzellenstruktur erneut festgesetzt werden, wodurch sich eine große Flexibilität bei der Verkabelung ergibt.

Nach Maßgabe einer weiteren vorteilhaften Ausgestaltung weist der Halter mindestens zwei unterseitig am Halterkörper angeordnete, in die Nut einrastbare Haltefüße auf, wobei die Haltefüße mittels eines Fixierelements auseinander spreizbar sind, um einen Press- und Reibschluss mit der Nut herzustellen.
Durch diese Ausgestaltung kann der Halter leicht in die Nut eingesteckt werden und anschließend durch das Einpressen des Fixierelements in diese durch einen kombinierten Form- und Reibschluss festgesetzt werden. Das Fixierelement kann beispielsweise als ein zylindrisch ausgestalteter Einpressdorn ausgestaltet sein, der beim Einpressen in den Grundkörper des Halters die Haltefüße zur Herstellung des Presssitzes auseinander spreizt. Durch die auseinander spreizbaren Haltefüße sind Einfädelöffnungen in der Nut, die im Strangpressverfahren nicht ohne weiteres herstellbar wären und zusätzliche Bearbeitungsschritte erforderten, nicht erforderlich.

Gemäß einer Weiterbildung des Halters ist das Fixierelement durch einen separaten Rastmechanismus mit dem Halter zusätzlich gegen Lösen gesichert.
Hierdurch wird das unbeabsichtigte Lösen des Halters, beispielsweise durch Vibrationen oder Bewegungen der Rumpfstruktur, vermieden.

Eine weitere Ausgestaltung des Halters sieht vor, dass die Nut zur Anordnung von weiteren Funktionselementen bzw. Bauelementen, beispielsweise von quer zur Längsrichtung der Nut verlaufenden Sitzschienen oder dergleichen, durch mindestens eine Ausnehmung unterbrochen ist.
Hierdurch wird eine Anbindung weiterer konstruktiver Elemente, unbeschadet des Vorhandenseins der Nut, ermöglicht. Durch die Ausnehmungen können beispielsweise Sitzschienenprofile für die Arretierung der Bestuhlung in Passagierflugzeugen in gewohnter Weise auf den Querträgern des Fußbodengerüstes aufgelegt und befestigt werden, wobei die Querträger zumindest noch abschnittsweise Befestigungsnuten für die Leitungshalter aufweisen und somit weiter zur Befestigung von Leitungen herangezogen werden können.

Nach Maßgabe einer weiteren Ausführungsform ist mindestens eine Leitung direkt auf dem Halter befestigbar.
Hierdurch ist ein konstruktiv einfacher Aufbau des Halters gewährleistet, der bevorzugt mit einem faserverstärkten thermoplastischen Kunststoffmaterial gebildet ist. In Verbindung mit den industriell im Strangpressverfahren endlos herzustellenden Versteifungsprofilen ergibt sich ein hochflexibles sowie zeit- und kostensparendes Leitungskonzept für die Verlegung und Lagefixierung von Leitungen aller Art in Rumpfzellen von Flugzeugen. Grundsätzlich sind mittels der erfindungsgemäßen Halteranordnung Leitungen aller Art, insbesondere auch schwerere Leitungen sowie Leitungen mit größeren Querschnittsabmessungen, wie beispielsweise elektrische Generatorleitungen oder Abwasser- und Klimatisierungsleitungen befestigbar.

Nach einer weiteren Ausgestaltungsvariante ist auf dem Halter mindestens ein Funktionsträger zur Fixierung mindestens einer Leitung durch Aufrasten befestigbar. Hierdurch wird es möglich, einen als Grundkörper ausgebildeten Halter zur Befestigung einer großen Vielzahl von unterschiedlichen Leitungstypen durch lediglich den Austausch des Funktionsträgers auszubilden und die Anzahl der vorzuhaltenden Halter für eine große Anzahl von Leitungsvarianten, wie zum Beispiel elektrische Versorgungs- oder Steuerleitungen, Glasfaserleitungen, Hydraulikleitungen oder Klimatisierungsleitungen zu verringern.

Weitere vorteilhafte Ausgestaltungen der Rumpfzellenstruktur sind in den weiteren Patentansprüchen dargelegt.

In der Zeichnung zeigt:
- **Fig. 1**: Eine perspektivische Ansicht eines Ausschnittes einer Rumpfzellenstruktur eines Flugzeugs mit einer fixierten Leitung,
- **Fig. 2**: eine vergrößerte Querschnittsdarstellung durch den mittleren Stringer der Fig. 1 mit einem dahinter liegenden Ringspantausschnitt,
- **Fig. 3**: eine perspektivische Ansicht eines Querträgers mit einer Vielzahl von Nuten zur Befestigung der Halter, und
- **Fig. 4**: eine Draufsicht auf zwei Querträger nach Maßgabe der Fig. 3 mit aufliegenden Sitzschienenprofilen.

In der Zeichnung weisen dieselben konstruktiven Elemente jeweils die gleiche Bezugsziffer auf.

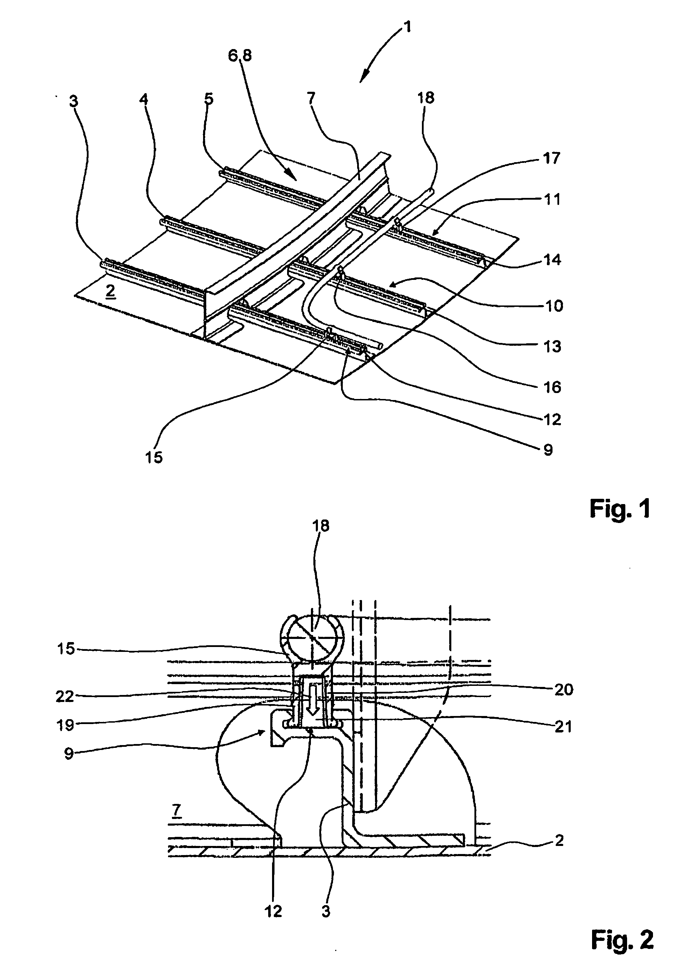

Die **Fig. 1** zeigt einen perspektivischen Ausschnitt einer Rumpfzellenstruktur eines Flugzeugs.
Eine Rumpfzellenstruktur 1 eines nicht dargestellten Flugzeugs umfasst unter anderem eine Rumpfzellenhaut 2 mit darauf angeordneten Stringern 3 bis 5 als (Längs-) versteifungselemente 6. Die Stringer 3 bis 5 weisen jeweils eine in etwa Z-förmige Querschnittsgeometrie auf. Quer zu den Stringern 3 bis 5 verläuft ein Ringspant 7 als ein weiteres (Quer-)versteifungselement 8 der Rumpfzellenstruktur 1. Der Ringspant 7 weist eine im Wesentlichen T-förmige Querschnittsgeometrie mit einem im Kopfbereich unter einem Winkel von 90° abgewinkelten Flansch auf. In Kopfbereichen 9 bis 11 der Stringer 3 bis 5 verlaufen jeweils in Längsrichtung der Stringer 3 bis 5 die Nuten 12 bis 14, in denen Halter 15 bis 17 zur Fixierung einer Leitung 18 festgesetzt sind. Grundsätzlich können die Nuten 12 bis 14 auch außerhalb der Kopfbereiche 9 bis 11 angeordnet sein, solange die Anbindung der Stringer 3 bis 5 an die Rumpfzellenhaut 2 sowie weiterer Komponenten hierdurch nicht beeinträchtigt ist. Alternativ können die Stringer 3 bis 5 auch eine Ω-förmige Querschnittsgeometrie aufweisen.

Die **Fig. 2** zeigt eine vergrößerte Querschnittsdarstellung des linken Stringers in der Fig. 1 mit einem dahinter verlaufenden Ringspant.
In der im Kopfbereich 9 des Stringers 3 verlaufenden Nut 12 ist der Halter 15 fixiert. Die Nut 12 weist - wie die übrigen Nuten auch - eine umgekehrt T-förmige Querschnittsgeometrie auf. Der Halter 15 ist mit zwei unterseitig angeordneten Haltefüßen 19,20 ausgestattet, die mittels eines Fixierelementes 21 nach außen aufspreizbar sind, um einen Press- und Reibschluss mit der Nut 12 herzustellen und hierdurch den Halter 15 an der beabsichtigten Position auf dem Stringer 3 festzusetzen. Das Einpressen des beispielsweise zylinderförmig ausgestalteten Fixierelements 21 (Einpressdorn) erfolgt in Richtung des Pfeils 22. Um ein unbeabsichtigtes Lösen des Halters 15 zu verhindern, verrastet das Fixierelement 21 in der dargestellten Position mit dem Halter 15. Anstatt des Fixierelements 21 kann beispielsweise auch ein Schraubelement zur Fixierung des Halters 15 in der Nut 12 vorgesehen sein. In einem oberen Bereich weist der Halter 15 eine Ω-förmig ausgebildete Gabel zur bevorzugt rastenden Aufnahme der Leitung 18 auf. Alternativ kann die Leitung 18 auch mittels zusätzlicher Kabelbinder oder vergleichbarer Mittel auf dem Halter 15 fixiert werden. Der Halter 15 kann einstückig mit einem faserverstärkten, bevorzugt thermoplastischen Kunststoffmaterial gebildet sein.

In einer in der Zeichnung nicht dargestellten Ausführungsvariante ist eine zweiteilige Ausbildung des Halters für die Leitungen vorgesehen. In dieser Konstellation umfasst der Halter einen Grundkörper mit wiederum unterseitig - entsprechend zur Darstellung der Fig. 2 - ausgebildeten Haltefüßen, die in die Nut 12 des Stringers 3 einbringbar und darin unter Schaffung eines zumindest bereichsweisen Formschlusses einklemmbar sind. Auf den Grundkörper des Halters ist ein so genannter Funktionsträger bevorzugt aufrastbar, der an den jeweils zu fixierenden Leitungstyp und/oder die Anzahl der zu befestigenden Leitungen individuell angepasst ist. Durch diese Ausgestaltung ist es möglich, mit ein und demselben Grundkörper des Halters eine größere Anzahl von unterschiedlichen Leitungsarten zu fixieren und gleichzeitig die Anzahl der vorzuhaltenden Haltertypen zu begrenzen.

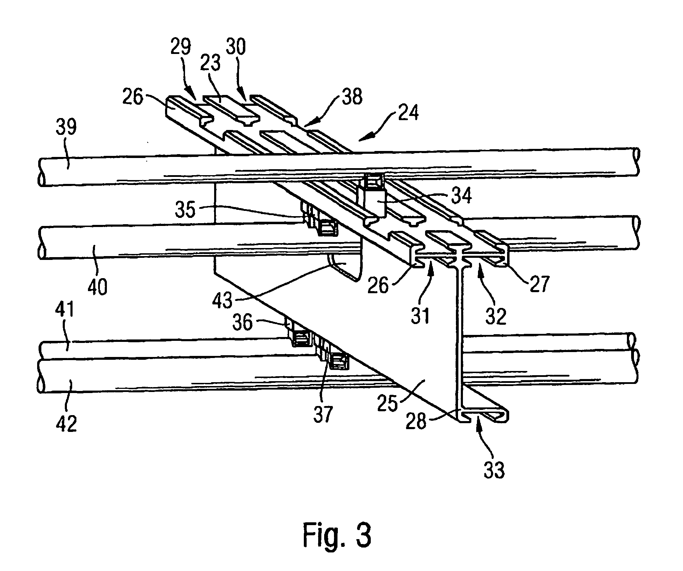

Die **Fig. 3** zeigt eine perspektivische Ansicht einer Schnittdarstellung durch einen Querträger für ein Fußbodengerüst in einem Passagierflugzeug mit einer Vielzahl von Nuten zur Befestigung mehrerer Halter.

Ein Querträger 23 als ein Versteifungselement 24, insbesondere zur Abstützung eines Fußbodengerüstes innerhalb einer Rumpfzellenstruktur eines Passagierflugzeugs, weist eine im Wesentlichen T-förmige Querschnittsgeometrie auf. An einem oberen Ende eines senkrecht verlaufenden Steges 25 schließen, jeweils symmetrisch zueinander ausgestaltet, ein linker und ein rechter Kopfflansch 26,27 an, während an einem unteren Ende des Steges 25 an diesen ein Fußflansch 28, unter einem Winkel von 90° auf der rechten Seite des Steges anschließt. Sämtliche Flansche 26 bis 28 weisen jeweils bevorzugt dieselbe Breite auf. Erfindungsgemäß sind in jeweils eine Ober- und eine Unterseite der beiden Kopfflansche 26,27 Nuten 29 bis 32 eingebracht. In den Fußflansch 28 ist unterseitig eine weitere Nut 33 eingelassen. Die Nuten 29 bis 33 weisen wiederum eine umgekehrt T-förmige Querschnittsgeometrie auf (vgl. Stringer in Fig. 1,2), um die vier Halter 34 bis 37 darin befestigen zu können. Die endgültige Anzahl und Anordnung der Nuten 29 bis 33 im Bereich des Querträgers 23 variiert in Abhängigkeit vom Anwendungsfall.

Die konstruktive Detailausgestaltung der Befestigung der Halter 34 bis 37 in den Nuten 29 bis 33 ist aus Gründen der besseren Übersicht nicht näher dargestellt, entspricht in ihrem konstruktiven Aufbau aber der in den Fig. 1, 2 dargestellten und beschriebenen Befestigung der Halter 15 bis 17 in den Stringern 3 bis 5 mittels eines kombinierten Press- und Reibschlusses, der durch das Aufspreizen von mindestens zwei unterseitig am Halter ausgebildete Haltefüße innerhalb der Nut durch das Eintreiben eines Spreizdorns als Fixierelement bewirkt wird.

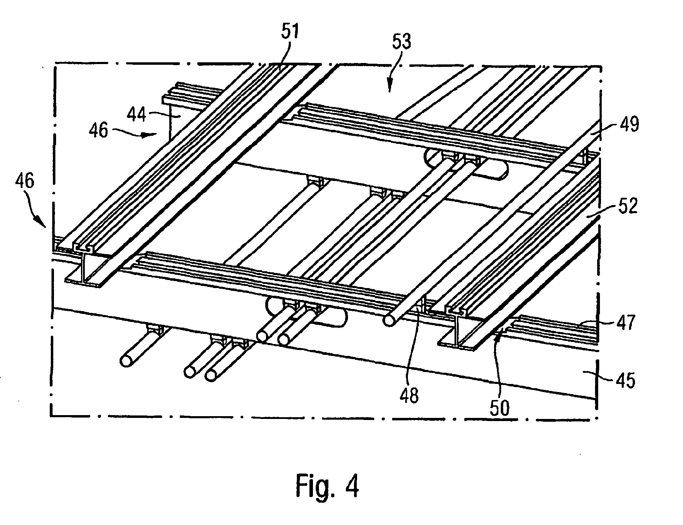

Im Unterschied zur Ausgestaltung nach Maßgabe der Nuten in den Fig. 1,2 sind die oberen Nuten 29 und 30 mit Ausnehmungen, von denen lediglich eine Ausnehmung 38 eine Bezugsziffer trägt, versehen, um die Anbindung von weiteren Funktionselementen bzw. Bauelementen, wie zum Beispiel Sitzschienenprofilen (nicht gezeigt in der Fig. 3, vgl. jedoch Fig. 4) oder dergleichen nicht zu beeinträchtigen. In den Haltern 34 bis 37 sind jeweils Leitungen bzw. Leitungsbündel 39 bis 42 geführt und befestigt, wobei die Leitungen 39 bis 42 jeweils unter einem Winkel von etwa 90° in Bezug auf eine Längsachse des Querträgers 23 verlaufen. Hinsichtlich der Ausführung der Befestigung der Leitungen 39 bis 42 in den Haltern 34 bis 37 kann auf die im Rahmen der Beschreibung der Befestigung der Leitung 18 in den Haltern 15 bis 17 in den Fig. 1,2 weiter oben verwiesen werden.

Um eine unterseitige Durchführung der Leitung 40 durch den Steg 25 des Querträgers 23 zu ermöglichen, weist dieser eine Durchführung 43 auf, die im Anschluss an den Extrusionsprozess beispielsweise durch spanende Bearbeitung im Querträger hergestellt wird. Die Ausnehmungen in den Nuten 29 bis 33 können beispielsweise durch Fräsen hergestellt werden, wenn eine integrale Herstellung bereits während des Strangpressprozesses des Querträgers 23 nicht möglich ist.

Die Halter 34 bis 37 können einstückig oder zweiteilig ausgebildet sein. Im Fall von zweiteilig ausgestalteten Haltern 34 bis 37 bestehen diese jeweils aus einem Grundkörper, der in den Nuten 29 bis 33 durch Verklemmen mittels Presssitz unter Schaffung eines zumindest bereichsweisen Formschlusses in der beschriebenen Art befestigbar ist. Auf die Grundkörper wird dann jeweils ein Funktionsträger aufgerastet, der individuell an den zu befestigenden Leitungstyp angepasst ist und mit dem die Leitung in ihrer Lage fixiert wird.

Die **Fig. 4** veranschaulicht ferner eine Draufsicht auf zwei entsprechend der Fig. 3 ausgestaltete Querträger mit aufliegenden Sitzschienenprofilen.
Zwei, jeweils entsprechend der Darstellung der Fig. 3 ausgebildete Querträger 44,45 als Versteifungselement 46 weisen eine Vielzahl von Nuten mit darin befestigten Haltern auf, von denen lediglich eine Nut 47 und ein Halter 48 mit einer darin aufgenommenen Leitung 49 eine Bezugsziffer tragen. Im Bereich von insgesamt vier Ausnehmungen, von denen eine Ausnehmung 50 repräsentativ für die Übrigen mit einer Bezugsziffer versehen ist, sind die im Kopfbereich der Querträger 44,45 eingebrachten Nuten unterbrochen. In den Ausnehmungen liegen zwei, quer zu den Querträgern 44,45 verlaufende Sitzschienenprofile 51,52 auf den Querträgern 44,45 auf und bilden einen Teil eines nicht vollständig dargestellten Fußbodengerüstes 53 zur Auflage von gleichfalls nicht dargestellten Fußbodenplatten in einem Passagierraum eines Flugzeugs.

Mittels der erfindungsgemäß ausgestalteten Rumpfzellenstruktur 1 zur erleichterten Befestigung von Haltern für Leitungen aller Art, insbesondere im Bereich von Stringern und Querträgern von Fußbodengerüsten, ist eine Befestigung der für große Teile der Verkabelung erforderlichen Halter weitgehend ohne die Notwendigkeit der Einbringung von Löchern möglich. Die entstehenden Leitungsführungen können darüber hinaus durch einfaches Lösen und Verschieben von einzelnen Haltern oder ganzer Gruppen von Haltern in den Nuten schnell an sich verändernde Verlegeanforderungen angepasst werden.

### Bezugszeichenliste

| | | | |
|---|---|---|---|
| 1 | Rumpfzellenstruktur | | |
| 2 | Rumpfzellenhaut | | |
| 3 | Stringer | | |
| 4 | Stringer | | |
| 5 | Stringer | | |
| 6 | Versteifungselement | | |
| 7 | Ringspant | | |
| 8 | Versteifungselement | | |
| 9 | Kopfbereich | 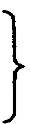 | Stringer |
| 10 | Kopfbereich | | |
| 11 | Kopfbereich | | |
| 12 | Nut | | |
| 13 | Nut | | |
| 14 | Nut | | |
| 15 | Halter | | |
| 16 | Halter | | |
| 17 | Halter | | |
| 18 | Leitung | | |
| 19 | Haltefuß | | |
| 20 | Haltefuß | | |
| 21 | Fixierelement | | |
| 22 | Pfeil | | |
| 23 | Querträger | | |
| 24 | Versteifungselement | | |
| 25 | Steg | | |
| 26 | linker Kopfflansch | | |
| 27 | rechter Kopfflansch | | |
| 28 | Fußflansch | | |
| 29 | Nut | 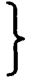 | Kopfflansch |
| 30 | Nut | | |
| 31 | Nut | 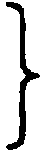 | Kopfflansch |
| 32 | Nut | | |
| 33 | Nut (Fußflansch) | | |
| 34 | Halter (linker Kopfflansch Oberseite) | | |
| 35 | Halter (linker Kopfflansch Unterseite) | | |
| 36 | Halter (Fußflansch) | | |
| 37 | Halter (Fußflansch) | | |
| 38 | Ausnehmung (Kopfflansch) | | |
| 39 | Leitung | | |
| 40 | Leitung | | |
| 41 | Leitung | | |
| 42 | Leitung | | |
| 43 | Durchführung (Steg) | | |
| 44 | Querträger | | |
| 45 | Querträger | | |
| 46 | Versteifungselement | | |
| 47 | Nut | | |
| 48 | Halter | | |
| 49 | Leitung | | |
| 50 | Ausnehmung | | |
| 51 | Sitzschienenprofil | | |
| 52 | Sitzschienenprofil | | |
| 53 | Fußbodengerüst | | |

## Patentansprüche

1. Rumpfzellenstruktur (1) eines Flugzeugs zur vereinfachten Verlegung und Befestigung mindestens eines Halters (15-17,34-37,48) für mindestens eine Leitung (18,39-42,49), wobei die Rumpfzellenstruktur (1) eine Vielzahl von Versteifungselementen (6,8,24,46) aufweist, und die Versteifungselemente (6,8,24,46) zumindest bereichsweise mindestens eine Nut (12-14,29-33,47) aufweisen, **dadurch gekennzeichnet, dass** die Versteifungselemente (6,8,24,46) mit einem Aluminiumlegierungsmaterial gebildet sind,
die Versteifungselemente (6,8,24,46) als Stringer (3-5) mit einer im Wesentlichen Z-förmigen Querschnittsgeometrie, wobei die mindestens eine Nut (12-14) in einem Kopfbereich (9-11) des Stringers (3-5) verläuft, oder als im Bereich eines Fußbodengerüstes (53) angeordnete Querträger (23,44,45) ausgebildet sind, wobei die mindestens eine Nut (29-33,47) in Kopfflanschen und/oder Fußflanschen (26-28) der Querträger (23,44,45) verläuft, und dass in der mindestens einen Nut (12-14,29-33,47) mindestens ein Halter (15-17,34-37,48) zur Lagefixierung mindestens einer Leitung (18,39-42,49) befestigt ist und die Leitung (18, 39-42, 49) mittels des Halters (15-17, 34-37, 48) innerhalb der Rumpfzellenstruktur (1) befestigt ist.

2. Rumpfzellenstruktur (1) nach Patentanspruch 1,
**dadurch gekennzeichnet, dass** die mindestens eine Nut (12-14,29-33,47) eine im Wesentlichen umgekehrt T-förmige Querschnittsgeometrie aufweist.

3. Rumpfzellenstruktur (1) nach Patentanspruch 1 oder 2,
**dadurch gekennzeichnet, dass** der mindestens eine Halter (15-17,34-37,48) mindestens zwei in die mindestens eine Nut (12-14,29-33,47) einrastbare Haltefüße (19,20) aufweist, wobei die Haltefüße (19,20) mittels mindestens eines Fixierelements (21) auseinander spreizbar sind, um einen Press- und Reibschluss mit der mindestens einen Nut (12-14,29-33,47) herzustellen.

4. Rumpfzellenstruktur (1) nach Patentanspruch 3,
**dadurch gekennzeichnet, dass** das mindestens eine Fixierelement (21) durch Verrasten mit dem mindestens einen Halter (15-17,34-37,48) gegen unbeabsichtigtes Lösen gesichert ist.

5. Rumpfzellenstruktur (1) nach einem der vorstehenden Patentansprüche, **dadurch gekennzeichnet, dass** die mindestens eine Leitung (18,39-42,49) unmittelbar auf dem mindestens einen Halter (15-17,34-37,48) befestigbar ist.

6. Rumpfzellenstruktur (1) nach einem der vorstehenden Patentansprüche, dadurch gekenntzeichnet, dass auf dem mindestens einen Halter (15-17,34-37,48) mindestens ein Funktionsträger zur Aufnahme der mindestens einen Leitung (18,39-42,49) befestigbar, insbesondere aufrastbar, ist.

7. Rumpfzellenstruktur (1) nach einem der Patentansprüche 1 bis 6, **dadurch gekennzeichnet, dass** die mindestens eine Nut (12-14,29-33,47) zur Anordnung weiterer Funktionselemente, insbesondere von Sitzschienenprofilen (51,52), durch mindestens eine Ausnehmung (38,50) unterbrochen ist.

## Claims

1. Fuselage cell structure (1) of an aircraft for simplified laying and fastening of at least one holder (15-17, 34-37, 48) for at least one line (18, 39-42, 49), the fuselage cell structure (1) comprising a plurality of reinforcing elements (6, 8, 24, 46), and the reinforcing elements (6, 8, 24, 46) comprising, at least in regions, at least one groove (12-14, 29-33, 47), **characterised in that**
the reinforcing elements (6, 8, 24, 46) are formed using an aluminium alloy material,
the reinforcing elements (6, 8, 24, 46) are in the form of stringers (3-5) having a substantially Z-shaped crosssectional geometry, the at least one groove (12-14) extending in a head region (9-11) of the stringer (3-5), or in the form of crossbeams (23, 44, 45) arranged in the region of a floor frame (53), the at least one groove (29-33, 47) extending in head flanges and/or foot flanges (26-28) of the crossbeams (23, 44, 45), and **in that** at least one holder (15-17, 34-37, 48) for fixing at least one line (18, 39-42, 49) in place is fastened in the at least one groove (12-14, 29-33, 47), and the line (18, 39-42, 49) is fastened inside the fuselage cell structure (1) by means of the holder (15-17, 34-37, 48).

2. Fuselage cell structure (1) according to claim 1, **characterised in that** the at least one groove (12-14, 29-33, 47) is of a substantially inverted T-shaped crosssectional geometry.

3. Fuselage cell structure (1) according to either claim 1 or claim 2, **characterised in that** the at least one holder (15-17, 34-37, 48) comprises at least two holding feet (19, 20) which can be latched into the at least one groove (12-14, 29-33, 47), it being possible to spread the holding feet (19, 20) apart by means of at least one fixing element (21) so as to produce a press and frictional fit with the at least one groove (12-14, 29-33, 47).

4. Fuselage cell structure (1) according to claim 3, **characterised in that** the at least one fixing element (21) is secured against unintentional release by latching to the at least one holder (15-17, 34-37, 48).

5. Fuselage cell structure (1) according to any one of the preceding claims, **characterised in that** the at least one line (18, 39-42, 49) can be fastened directly to the at least one holder (15-17, 34-37, 48).

6. Fuselage cell structure (1) according to any one of the preceding claims, **characterised in that** at least one functional support for receiving the at least one line (18, 39-42, 49) can be fastened, in particular latched, onto the at least one holder (15-17, 34-37, 48).

7. Fuselage cell structure (1) according to any one of the claims 1 to 6, **characterised in that** the at least one groove (12-14, 29-33, 47) for arranging further functional elements, in particular seat rail profiles (51, 52), is interrupted by at least one recess (38, 50).

## Revendications

1. Structure cellulaire de fuselage (1) d'un avion destinée à faciliter la pose et la fixation d'au moins un support (15-17, 34-37, 48) pour au moins un câble (18, 39-42, 49), la structure cellulaire de fuselage (1) présentant une pluralité d'éléments de renforcement (6, 8, 24, 46) et les éléments de renforcement (6, 8, 24, 46) présentant au moins une rainure (12-14, 29-33, 47) au moins dans certaines zones, **caractérisée en ce que**
les éléments de renforcement (6, 8, 24, 46) sont composés d'un matériau en alliage d'aluminium,
les éléments de renforcement (6, 8, 24, 46) sont conçus sous forme de cavaliers (3-5) avec une géométrie en coupe transversale sensiblement en forme de Z et l'au moins une rainure (12-14) s'étendant dans une zone de tête (9-11) du cavalier (3-5), ou sous forme de profilés transversaux (23, 44, 45) disposés au niveau d'un châssis de plancher (53) et l'au moins une rainure (29-33, 47) s'étendant dans des brides de tête et/ou brides de plancher (26-28) des profilés transversaux (23, 44, 45), et **en ce que** dans l'au moins une rainure (12-14, 29-33, 47) au moins un support (15-17, 34-37, 48) étant fixé pour fixer en position au moins un câble (18, 39-42, 49) et le câble (18, 39-42, 49) étant fixé à l'intérieur de la structure cellulaire de fuselage (1) au moyen du support (15-17, 34-37, 48).

2. Structure cellulaire de fuselage (1) selon la revendication 1, **caractérisée en ce que** l'au moins une rainure (12-14, 29-33, 47) présente une géométrie en coupe transversale sensiblement en forme de T inversé.

3. Structure cellulaire de fuselage (1) selon la revendication 1 ou 2, **caractérisée en ce que** l'au moins un support (15-17, 34-37, 48) présente au moins deux pieds d'arrêt (19, 20) encliquetables dans l'au moins une rainure (12-14, 29-33, 47), les pieds d'arrêt (19, 20) pouvant être écartés l'un par rapport à l'autre au moyen d'au moins un élément de fixation (21) pour réaliser un accouplement par pression et par friction avec l'au moins une rainure (12-14, 29-33, 47).

4. Structure cellulaire de fuselage (1) selon la revendication 3, **caractérisée en ce que** l'au moins un élément de fixation (21) est protégé de tout détachement involontaire par accrochage avec l'au moins un support (15-17, 34-37, 48).

5. Structure cellulaire de fuselage (1) selon une des revendications précédentes, **caractérisée en ce que** l'au moins un câble (18, 39-42, 49) peut être fixé directement sur l'au moins un support (15-17, 34-37, 48).

6. Structure cellulaire de fuselage (1) selon une des revendications précédentes, **caractérisée en ce que**, sur l'au moins un support (15-17, 34-37, 48), au moins un support fonctionnel peut être fixé, en particulier encliqueté, pour recevoir l'au moins un câble (18, 39-42, 49).

7. Structure cellulaire de fuselage (1) selon une des revendications 1 à 6, **caractérisée en ce que** l'au moins une rainure (12-14, 29-33, 47) est interrompue par au moins un évidement (38, 50) pour agencer d'autres éléments fonctionnels, en particulier des profilés de glissières (51, 52).
